# EUROPEAN PATENT APPLICATION

(11) **EP 4 760 576 A1**
(43) Date of publication of application: **17.06.2026**
(21) Application number: 25220081.1
(22) Date of filing: 02.12.2025
(51) Int. Cl.: G06F 21/62, G06F 16/27, H04L 67/06, H04L 67/1095, H04L 9/40

(54) **ON DEMAND INTER-UNIVERSE MULTI-AUTHENTICATION MANAGED DATA TRANSPORTER**

(30) Priority: 13.12.2024 US 202463733577 P
(71) Applicant: Google LLC, Mountain View, CA 94043 (US)
(72) Inventor: KHARBANDA, Alankrit, Mountain View, California, 94043 (US); HERNANDEZ, Tyler Armand, Mountain View, California, 94043 (US); DAYANAND, Sowmya, Mountain View, California, 94043 (US); CURTIS, Ewan, Mountain View, California, 94043 (US)
(74) Representative: Betten & Resch

(57) **Abstract**

A system for managed data transfer in compute network, includes a first data store and a second data store. A data transfer agent and one or more servers plan and implement a data transfer to move data stored in the first data store to the second data store via the data transfer agent. The data agents are centrally managed by a control plane and are initialized with authentication credentials that are needed to effectuate the data transfer. The source data universe and the destination data universe may have different authentication interfaces. The data transfer agent will use a first credential to access data at the source and a second credential to copy the requested data to the destination.

## Description

### CROSS-REFERENCE TO RELATED APPLICATION

This application claims the benefit of U.S. Provisional Patent Application No. 63/733,577, filed December 13, 2024, which is incorporated herein by reference.

### BACKGROUND

The disclosure refers to managed transfers with multi-authentication interfaces. Transferring data across multiple disconnected systems with separate authentication mechanisms is a non-trivial problem to solve. However, there are some systems, such as the open source resource rclone, which have done it. However, even rclone does not perform a managed transfer. A managed transfer differs from a rclone transfer in that rclone has one worker entity that analyzes, plans and transfers data. This means these transfers are limited to one machine's network bandwidth, memory and CPU. However, our solution to managed transfers allows almost infinite scalability of data transfer workers by making it "managed", having a separate control plane with several servers planning a transfer and working with deployed dedicated transfer agents, which can be any number in count.

### BRIEF SUMMARY

The technology is generally directed to managed transfers that allow almost infinite scalability of data transfer agents by making it "managed". That is, having a separate control plane with several servers planning the transfer and working with deployed dedicated transfer agents, which can be any number in count.

A system for managed data transfer in compute network, includes a first data store storing user data, a second data store for receiving and storing the user data stored in the first data store, a data transfer agent in communication with the first data store and the second data store, and one or more servers in communication with the data transfer agent, the one or more servers planning and implementing a data transfer to move the data stored in the first data store to the second data store via the data transfer agent.

A first authentication interface may correspond to the first data store, while a second authentication interface corresponds to the second data store. A first user credential for the first authentication interface and a second user credential for the second authentication interface are provided to the transfer agent. The credentials can be provided to the agent at initialization. In some implementations, the transfer agent may store the first user credential for the first authentication interface and the second user credential for the second authentication interface. The one or more servers include a control plane, the control plane having a distributed service for the planning and implementing of the data transfer. The control plane can be in communication with a number of transfer agents. The first data store may be resident in a first computing universe and the second data store resident in a second computing universe. In one example, the control plane is located in the second computing universe and the group of agents are located in the first computing universe. The group of agents can be in communication with a cloud service. The cloud service can generate a list of tasks to be performed by one or more agents of the group of agents. The list of task may include a first set of List Tasks and a second set of copy tasks. A List Task or a Copy Task can be assigned to one of the group of transfer agents, and the assigned agent performs a resource list from a source data store or data copy from a source data store to a destination data store using a first authentication to retrieve data from the source data store and a second authentication to copy the retrieved data to the second data store. The performance of the List Task or Copy Task may generate additional tasks that are managed by the control plane and provided to one or more data transfer agents. The agent may utilize one of the computing universe and the second computing universe as a control plane and the other computing universe as a destination. The agent can be configured to reverse the computing universe utilized for the control plane and the destination.

According to a method of the described technology for transferring data in a distributed computing network a user may start one or more data transfer agents and trigger a data transfer job. The one or more data transfer agents receive a command to list directories at a source data store from a transfer service of the network. The one or more data transfer agents provide the list of directories at the source data store to the transfer service and receive one or more tasks for performing the data transfer. The agent then copies data store in the source data store to the destination data store. The one or more tasks for performing data transfer can be distinguished as one of a listing task or a copying task. Once the tasks are completed, the one or more data transfer agents notify the transfer service that the job is complete.

At the time a data transfer agent is started, a user may supply one or more authentication credentials corresponding to an environment of the source data store and corresponding to an environment of the destination data store.

The environment of the source data store and the environment of the destination data store use different authentication method, and the distributed computing network includes a cloud network.

### BRIEF DESCRIPTION OF THE DRAWINGS

FIG. 1 is a block diagram of a reversible multi universe data transport system according to the described technology.
FIG. 2 is a Gannt diagram showing data transfer in a managed agent-based process according to the described technology.
FIG. 3 is a process flow diagram for a data transfer operation according to aspects of the disclosed technology.
FIG. 4 is a block diagram of a network performing a data transfer according to aspects of the disclosed technology.
FIG. 5 is a block diagram of an example system according to aspects of the disclosure.

### DETAILED DESCRIPTION

The technology generally relates to managed data transfers in a distributed networking environment, such as a cloud network. A managed transfer differs from conventional transfer in that conventional data transfer techniques use one worker which analyzes, plans and transfers data, meaning transfers are limited to one machine's network bandwidth, memory and CPU. According to an implementation, there is provided a system for managed data transfer in a compute network including a first data store and a second data store. A data transfer agent and one or more servers plan and implement a data transfer to move data stored in the first data store to the second data store via the data transfer agent. The data agents are centrally managed by a control plane and are initialized with authentication credentials that are needed to effectuate the data transfer. The source data universe and the destination data universe may have different authentication interfaces. The data transfer agent will use a first credential to access data at the source and a second credential to copy the requested data to the destination.

The disclosed technology can work across data universes, adding authentication for each universe and providing the authentications directly to the agent, thus removing the problem of storing credentials.

Multi-authentication interfaces refer to the ability to access the same kind of storage backend using different authentication interfaces. As an example, one may access a cloud service backends in different universes with different credential types (e.g., in one universe with the cloud platform style credentials, and in one universe with S3 compatible credentials.

This system aims to implement a managed process having multiple deployed agents, the agents working in tandem with a distributed service providing scalability to both the agent and the service side.

Rclone is an open source data transfer tool, which allows for executing transfers based on provided data source details. However, rclone is a local transporter, meaning that it plans and executes its own transfers, thus limiting its performance to that of a single process, with limitations of the network, CPU, and memory bandwidth of a single machine.

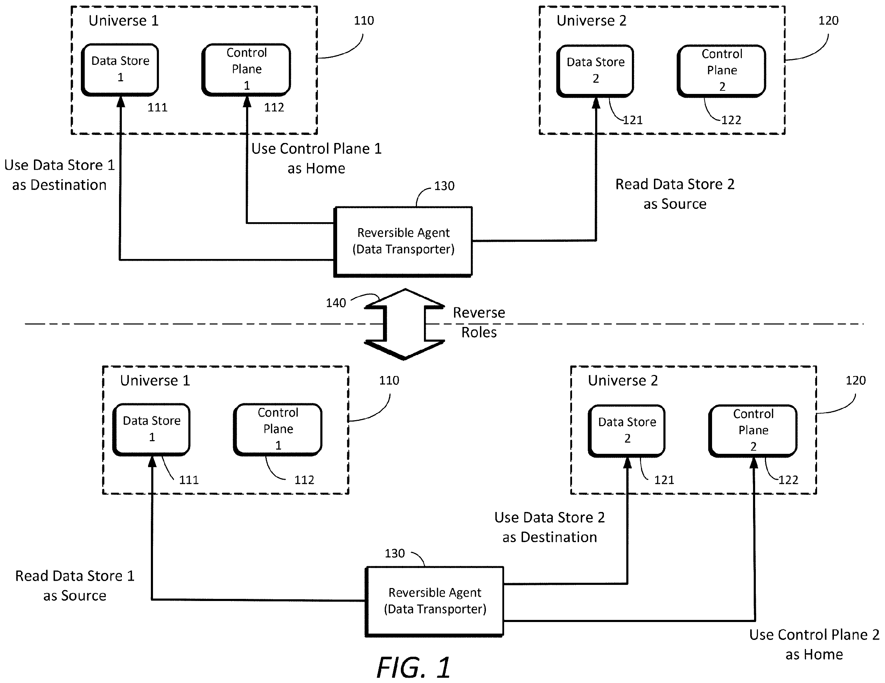

FIG. 1 is a high-level schematic view of a data transfer according to aspects of the disclosed technology.

A user starts agents 130 with relevant credentials passed to the agent 130. The user then triggers a transfer job by calling the cloud service (e.g., GCP transfer service), which instructs the agent(s) to list directories and files in the data source 121, using the authentication for the source 120 provided to the agent(s) 130 by the end user. When the agent(s) 130 provide this list to the Cloud service, the cloud service can then break the tasks into "list tasks" and "copy tasks", which are then assigned to the agent(s) 130. The agent 130 then uses the authentication for the destination 110 to be able to copy the data from the source 121 to the destination 111. Once all tasks have been complete, the job is marked as successful. The source 121 and destination 111 can have a completely different set of credentials, even if they are essentially the same backend. As an example, both can be cloud service backends, but use different style of credentials, e.g., source uses S3 style access tokens, while destination uses the native cloud platform style service accounts.

The process is reversible 140 due to the fact that the agent 130 can use either system 110, 120 as a control plane 112, 122 and the other as a destination. By simply changing the startup flags in the agent 130, one could switch the data flow direction. The transfer service agent (TSA) 130 can be implemented ass a containerized agent deployed on a customer premises which allows moving data from various systems, such as Posix, HDFS and S3 compatible systems and the like.

The agent 130 uses user provided credentials (e.g., ADC or SA credentials) to be able to chat with the cloud platform backend.

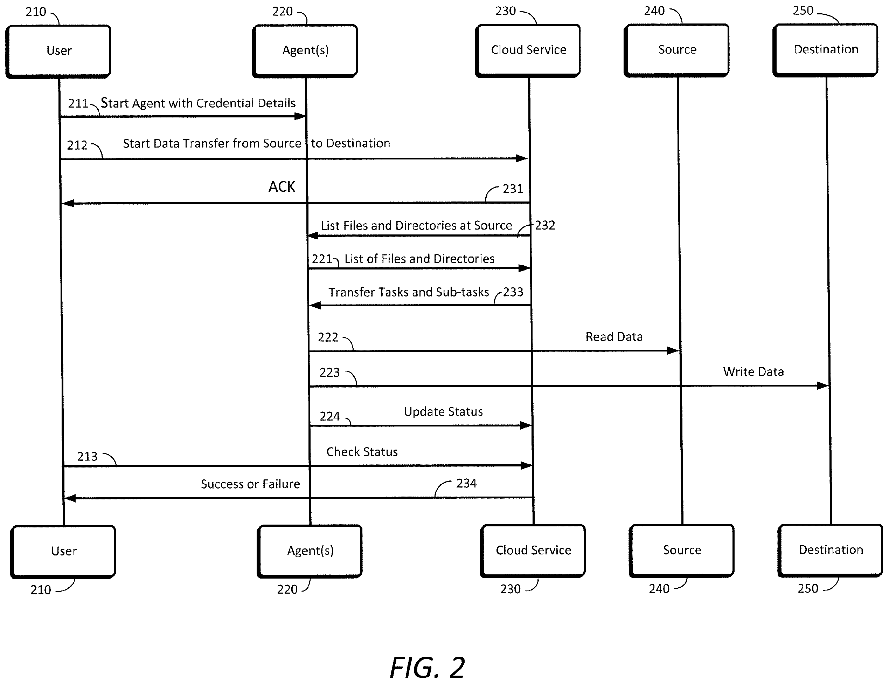

FIG. 2 is a Gantt chart showing the flow of information in a data transfer according to aspects of the disclosed technology. A user 210 starts one or agents 220 providing the agent 220 at startup with credential details needed to execute the data transfer 211. When the agent 220 has been initialized, the user 210 initiates a data transfer 212 via the cloud service 230. The cloud service 230 provides an acknowledgement message 231 back to the user 210 verifying the request was received. The data transfer is started by the cloud service 230 providing the agent 220 with a task 232 to provide a directory and file listing at the source 240 of the data transfer. The agent 220 then provides the source list of files and directories 221 to the cloud service 230. The cloud service 230 interprets the listing of files and directories at the source 240 and creates a set of transfer tasks 233 and provides the set of tasks to the agent 220.

Based on the received tasks, the agent 220 accesses the source 240 using the appropriate authentication credentials provided at startup. The agent 220 reads the data 222 to be transferred from the source 240. To then transfer the data, the agent 220 takes the read data from source 240 and writes the data 223 to the destination 250. The agent 220 gains access to the destination 250 using the appropriate authentication credentials for destination 250 provided by the user 210 at agent startup.

When all the tasks have been completed, the agent 220 updates the data transfer status 224 to the cloud service 230. The user 210 may submit a request to check the status of the transfer 213 from the cloud service 230. In response, the cloud service 230 will provide the user 210 with a message indicating success or failure 234 of the transfer request.

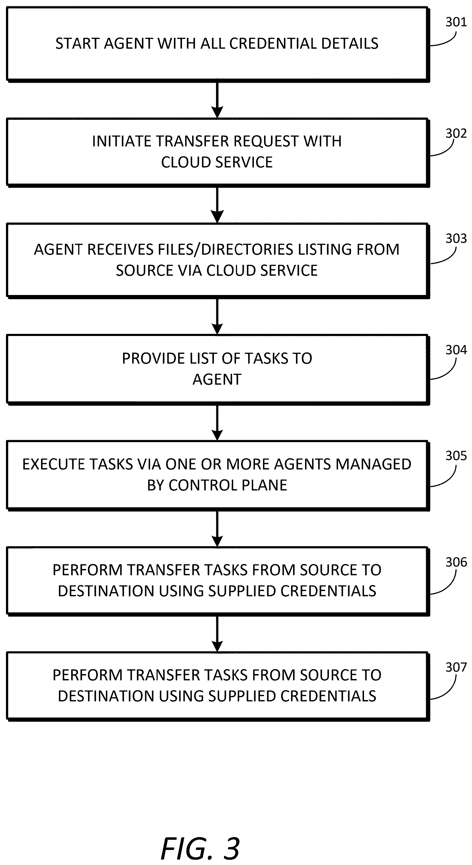

FIG. 3 is a process flow diagram of a data transfer process in a network according to aspects of the disclosed technology. A data transfer agent is started being provided with all the authentication credentials needed to affect the data transfer 301. The cloud service then receives the data transfer request from a user 302. The data transfer agent accesses the data source for the transfer using the required authentication credentials and performs a listing of the files and directories at the source 303. The cloud service reads the list of files and directories and creates a set of tasks for reading and copying the data. The list of tasks is provided to the agent 304. Using one or more agents, the tasks in the list of tasks are performed. The management of task execution across one or more agents is performed by a control plane in communication with the agents 305. The transfer tasks are performed by the associated agents by reading data from the source and writing the read data to the destination 306. The source and destination may exist in different computing universes, each having a different type of authentication method. The agents are supplied with the required credentials to access the source and the destination to perform the transfer tasks. When the tasks are complete, the completed status is provided to the cloud service. 307.

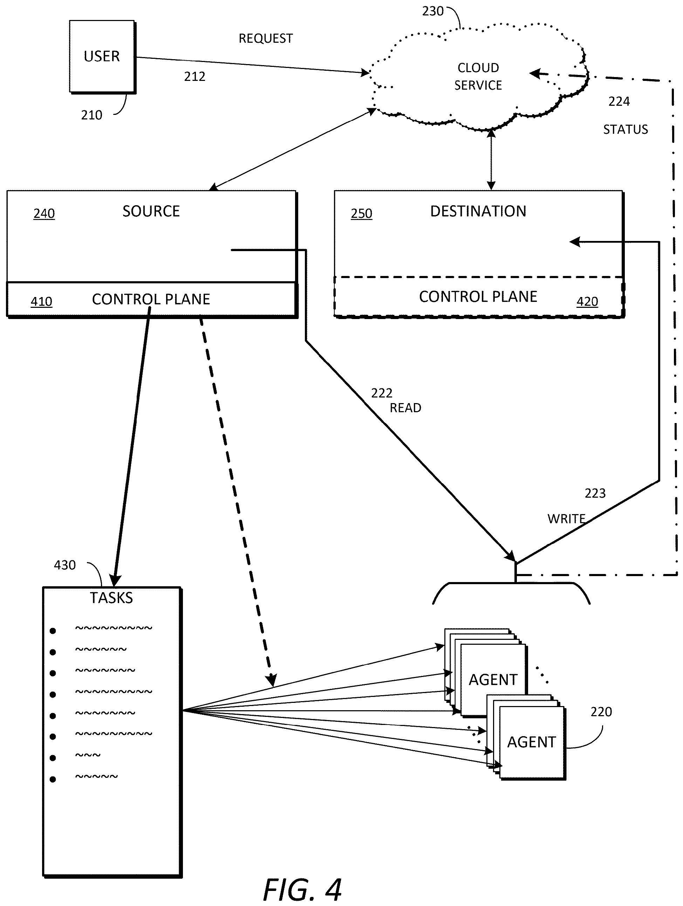

FIG. 4 is a block diagram of a network for performing data transfers according to aspects of the disclosed technology. In FIG. 4, a group of data transfer agents 220 are initiated by a user 210. When started, each agent 220 is provided with authentication credentials to access data locations in the network. The user 210 provides a transfer request 212 to the cloud service 230. Cloud service 230 is in communication with a source location 240 and a destination location 250. One of either the source location 240 or the destination location 250 contains a control plane 410, 420. Agents 220 may be initialized to identify which of the source location 240 and the destination location 250 is considered to contain the control plane 410, 420. For the sake of example in FIG. 4, the source location 240 contains the control plane 410 used to facilitate the transfer request 212.

Upon receiving the request, the control plane 410 instructs one or more of the agents 220 to access the source location 240 and generate a list of the files and directories at the source location 240. Via the control plane 410, the cloud service 230 generates a list of tasks 430 needed to complete the requested data transfer. Control plane 410 manages the agents 220 and assigns tasks from the list of tasks 430 to particular agents 220. The task instructs the agent 220 to read data 222 from the source location 240, and then write the read data 223 to the destination location 250. As the tasks in the task list 430 are completed, agents 220 provide a status 224 to the cloud service 230. User 210 may request a status of the data transfer from the cloud service 230 and the cloud service 230 will provide the status 224 to the user 210.

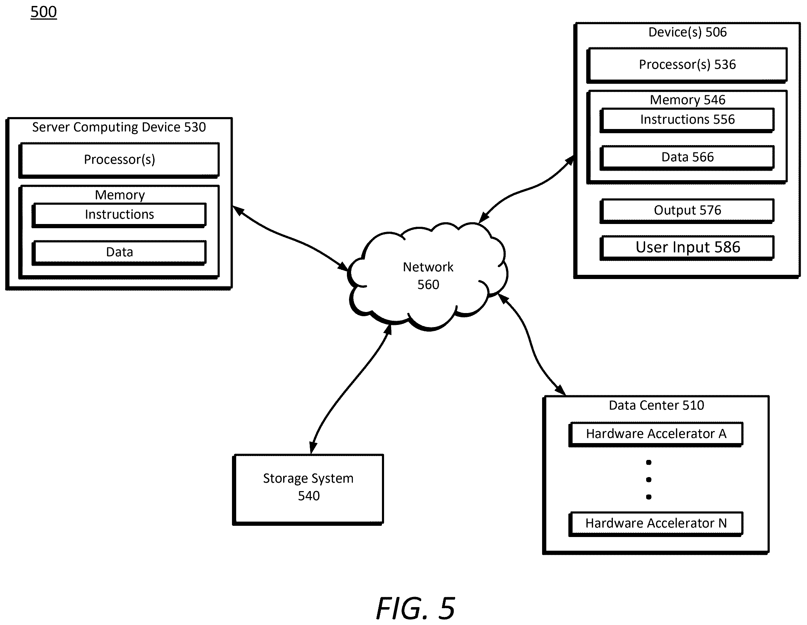

FIG. 5 illustrates an example system 500 in which the features described above may be implemented. It should not be considered limiting the scope of the disclosure or usefulness of the features described herein. In this example, system 500 may include device(s) 506, server computing device 530, storage system 540, and network 560.

Each device 506 may be a personal computing device intended for use by a respective user. The device 506 may include one or more processors 536, memory 546, data 566 and instructions 556. Each device 506 may also include an output 576, user input 586, and location sensor 596. By way of example only, devices 506 may be mobile phones or devices such as a wireless-enabled PDA, smartphones, a tablet PC, a wearable computing device (e.g., a smartwatch, AR/VR headset, smart helmet, etc.), a netbook that is capable of obtaining information via the Internet or other networks, or a smart home device, such as a home assistant, smart thermostat, smart doorbell, smart light, etc.

Memory 546 of device 506 may store information that is accessible by processor 536. Memory 546 may also include data that can be retrieved, manipulated or stored by the processor 536. The memory 546 may be of any non-transitory type capable of storing information accessible by the processor 536, including a non-transitory computer-readable medium, or other medium that stores data that may be read with the aid of an electronic device, such as a hard-drive, memory card, read-only memory ("ROM"), random access memory ("RAM"), optical disks, as well as other write-capable and read-only memories. Memory 546 may store information that is accessible by the processors 536, including instructions 556 that may be executed by processors 536, and data 566.

Data 566 may be retrieved, stored or modified by processors 536 in accordance with instructions 556. For instance, although the present disclosure is not limited by a particular data structure, the data 566 may be stored in computer registers, in a relational database as a table having a plurality of different fields and records, XML documents, or flat files. The data 566 may also be formatted in a computer-readable format such as, but not limited to, binary values, ASCII or Unicode. By further way of example only, the data 566 may comprise information sufficient to identify the relevant information, such as numbers, descriptive text, proprietary codes, pointers, references to data stored in other memories (including other network locations) or information that is used by a function to calculate the relevant data.

The instructions 556 can be any set of instructions to be executed directly, such as machine code, or indirectly, such as scripts, by the processor 536. In that regard, the terms "instructions," "application," "steps," and "programs" can be used interchangeably herein. The instructions can be stored in object code format for direct processing by the processor, or in any other computing device language including scripts or collections of independent source code modules that are interpreted on demand or compiled in advance. Functions, methods and routines of the instructions are explained in more detail below.

The one or more processors 536 may include any conventional processors, such as a commercially available CPU or microprocessor. Alternatively, the processor can be a dedicated component such as an ASIC or other hardware-based processor. Although not necessary, computing devices 506 may include specialized hardware components to perform specific computing functions faster or more efficiently.

Although Figure 5 functionally illustrates the processor, memory, and other elements of devices 506 as being within the same respective blocks, it will be understood by those of ordinary skill in the art that the processor or memory may actually include multiple processors or memories that may or may not be stored within the same physical housing. Similarly, the memory may be a hard drive or other storage media located in a housing different from that of the devices 506. Accordingly, references to a processor or device will be understood to include references to a collection of processors or devices or memories that may or may not operate in parallel.

Output 576 may be a display, such as a monitor having a screen, a touchscreen, a projector, or a television. The display 576 of the one or more computing devices 506 may electronically display information to a user via a graphical user interface ("GUI") or other types of user interfaces. For example, as will be discussed below, display 576 may electronically display query results.

The user input 586 may be a mouse, keyboard, touch-screen, microphone, or any other type of input.

The devices 506 can be at various nodes of a network 560 and capable of directly and indirectly communicating with other nodes of network 560. Although one device is depicted in Figure 5, it should be appreciated that a typical system can include one or more devices, with each device being at a different node of network 560. The network 560 and intervening nodes described herein can be interconnected using various protocols and systems, such that the network can be part of the Internet, World Wide Web, specific intranets, wide area networks, or local networks. The network 560 can utilize standard communications protocols, such as WiFi, Bluetooth, 4G, 5G, etc., that are proprietary to one or more companies. Although certain advantages are obtained when information is transmitted or received as noted above, other aspects of the subject matter described herein are not limited to any particular manner of transmission.

In one example, system 500 may include one or more server computing devices 530 having a plurality of computing devices, e.g., a load balanced server farm, that exchange information with different nodes of a network for the purpose of receiving, processing and transmitting the data to and from other computing devices. For instance, one or more server computing devices 530 may be a web server that is capable of communicating with the one or more client computing devices 506 via the network 560. In addition, server computing device 530 may use network 560 to transmit and present information to a user of one of the other computing devices 506.

Server computing device 530 may include one or more processors, memory, instructions, data, etc. These components operate in the same or similar fashion as those described above with respect to computing device 506.

According to some examples, the server computing device 530 may be connected over the network to a data center 510 housing any number of hardware accelerators. The data center 510 can be one of multiple data centers or other facilities in which various types of computing devices, such as hardware accelerators, are located. Computing resources housed in the data center can be specified for repeated results monitoring, including identifying repeated query results, or the like.

The server computing device 530 can be configured to receive queries from the client computing device 506 on computing resources in the data center 510. For example, the environment can be part of a computing platform configured to provide a variety of services to users, through various user interfaces and/or application programming interfaces (APIs) exposing the platform services. The variety of services can include identifying content responsive to the query, determining whether query results are repeated query results, or the like. The client computing device 506 can transmit input data associated with a query. The server computing device 530 can receive the input data and, in response, identify and provide for output query results. When identifying the query results, the server computing device 530 can generate a signature for the query results. The generated signature may be compared to other signatures associated with the query results and/or historical query signatures. Based on the comparison, the server computing device 530 can determine whether the query results are repeated query results. In examples where the query results are repeated query results, the server computing device 530 can enable one or more preventative measures.

As other examples of potential services provided by a platform implementing the environment, the server computing device can maintain a variety of models in accordance with different constraints available at the data center. For example, the server computing device can maintain different families for deploying models on various types of TPUs and/or GPUs housed in the data center or otherwise available for processing.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, which is generated to encode information for transmission to suitable receiver apparatus for execution by a data processing apparatus.

The term "configured" is used herein in connection with systems and computer program components. For a system of one or more computers to be configured to perform particular operations or actions means that the system has installed on its software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a stand-alone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purposes logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A system for managed data transfer in compute network, comprising:
a first data store storing user data;
a second data store for receiving and storing the user data stored in the first data store;
a data transfer agent in communication with the first data store and the second data store; and one or more servers in communication with the data transfer agent, the one or more servers planning and implementing a data transfer to move the data stored in the first data store to the second data store via the data transfer agent.

2. The system of claim 1, further comprising:
a first authentication interface corresponding to the first data store; and
a second authentication interface corresponding to the second data store; and
wherein the system further optionally comprises:
the transfer agent storing a first user credential for the first authentication interface and a second user credential for the second authentication interface.

3. The system of claim 1 or claim 2, the one or more servers comprising a control plane, the control plane comprising a distributed service for the planning and implementing of the data transfer.

4. The system of claim 3, comprising a plurality of transfer agents in communication with the control plane.

5. The system of claim 4, wherein the first data store is resident in a first computing universe and the second data store is resident in a second computing universe.

6. The system of claim 5, wherein the control plane is located in the second computing universe and the plurality of agents are located in the first computing universe.

7. The system of claim 5, further comprising a cloud service in communication with the plurality of agents.

8. The system of claim 7, further comprising:
a list of tasks generated by the cloud service, the tasks in the list of tasks to be performed by one or more agents of the plurality of agents.

9. The system of claim 8, wherein the list of tasks comprises:
a first set of list tasks; and
a second set of copy tasks.

10. The system of claim 9, wherein a copy task of the set of copy tasks is assigned to one of the plurality of transfer agents, and the assigned transfer agent performs a data copy from a source data store to a destination data store using a first authentication to retrieve data from the source data store and a second authentication to copy the retrieved data to the second data store; and
wherein the agent optionally utilizes one of the computing universe and the second computing universe as a control plane and the other computing universe as a destination; and
wherein the agent optionally reverses the computing universe utilized for the control plane and the destination.

11. A method for transferring data in a distributed computing network, comprising:
starting, by a user, one or more data transfer agents;
triggering by the user, a data transfer job in the distributed computing network;
in the one or more data transfer agents, receiving from a transfer service of the distributed computing network, a command to list directories at a source data store;
providing, by the one or more data transfer agents, the list of directories at the source data store to the transfer service;
receiving at the one or more data transfer agents, one or more tasks for performing the data transfer; and
copying by the agent, data stored in the source data store to a destination data store.

12. The method of claim 11, further comprising:
receiving the one or more tasks for performing data transfer as one of a listing task or a copying task; and/or
wherein the method further comprises:
notifying to the transfer service, by the one or more data transfer agents that the one or more tasks for performing data transfer are completed.

13. The method of claim 11 or claim 12, further comprising:
when starting the one or more data transfer agents, supplying by the user one or more authentication credentials corresponding to an environment of the source data store, and corresponding to an environment of the destination data store, and
wherein optionally the environment of the source data store and the environment of the destination data store use different authentication methods.

14. The method of any one of claims 11 to 13, wherein the distributed computing network comprises a cloud network; and/or
wherein the method further comprises:
at the one or more data transfer agents, receiving instructions for performing data transfer tasks from a control plane, the control plane performing the planning of the data transfer job and working with the one or more data transfer agents.

15. A computer program comprising instructions that, when executed by one or more processors, causes the one or more processors to perform the method according to any one of claims 11 to 14.
